# FASCICULE DE BREVET EUROPEEN

(11) **EP 2 659 811 B1**
(45) Date de publication et mention de la délivrance du brevet: **18.03.2015**
(21) Numéro de dépôt: 13166310.6
(22) Date de dépôt: 02.05.2013
(51) Int. Cl.: A47J 43/07, B01F 15/00

(54) **Dispositif pour la réalisation d'émulsions de substances alimentaires**
Vorrichtung zum Herstellen von Emulsionen aus Lebensmitteln
Device for producing emulsions of food substances

(30) Priorité: 04.05.2012 FR 1254141
(43) Date de publication de la demande: 06.11.2013
(73) Titulaire: SEB S.A., 69130 Ecully (FR)
(72) Inventeur: Bourgeois-Jacquet, Jean-Marie, 21850 Saint-Apollinaire (FR); Letain, François, 21120 Marcilly-Sur-Tille (FR)
(74) Mandataire: Bourrières, Patrice

(56) Documents cités:
- GB-A- 2 469 639
- US-A1- 2010 300 304

## Description

La présente invention concerne un dispositif pour la réalisation d'émulsions de substances alimentaires comportant un fût renfermant un arbre entrainé en rotation par un moteur, le fut comportant une extrémité inférieure solidaire d'un stator comprenant une extrémité inférieure ouverte et une paroi périphérique munie de fentes traversantes, l'arbre comportant une extrémité inférieure solidaire d'un rotor comportant des moyens de cisaillement coopérant avec la paroi périphérique du stator pour générer un effet de cisaillement de la substance à traiter lors de la rotation du rotor.

II est connu, de la demande de brevet US 2010300304, un outil pour la préparation de mayonnaise comportant un fût renfermant un arbre entrainé en rotation par un boîtier moteur, le fût comportant une extrémité inférieure solidaire d'un stator comportant une extrémité inférieure ouverte et une paroi périphérique munie de fentes traversantes. L'arbre d'entrainement comporte une extrémité inférieure solidaire d'un rotor comportant des pales venant en bordure de la paroi périphérique avec un faible interstice par rapport à cette dernière afin de générer un effet de cisaillement de la substance à traiter lors de la rotation du rotor.

Un tel outil présente l'avantage de permettre rapidement la préparation de mayonnaise en partant d'ingrédients introduits dans un récipient sous forme liquide.

Cependant, un tel outil présente l'inconvénient de ne pas permettre la réalisation d'émulsions à partir de substances comportant des ingrédients solides, sans prébroyage, et ne permet donc pas la réalisation de certaines recettes telles l'Aïoli, la sauce tartare ou le guacamole.

Aussi, l'invention qui suit vise à pallier à cet inconvénient en proposant un dispositif pour la réalisation d'émulsions, simple et économique à réaliser, qui permette la réalisation de recettes variées et notamment qui permette d'obtenir le résultat désiré en mettant tous les ingrédients, y compris des ingrédients solides, en même temps au début de la préparation. Un autre but de la présente invention est de proposer un accessoire amovible destiné à être accouplé à un boîtier moteur de mixeur plongeant qui comporte un tel dispositif pour la réalisation d'émulsions.

Le but de l'invention est atteint par un dispositif pour la réalisation d'émulsions de substances alimentaires comportant un fût renfermant un arbre entraîné en rotation par un moteur et comportant une extrémité inférieure solidaire d'un stator, le stator comprenant une extrémité inférieure ouverte et une paroi périphérique munie de fentes traversantes, l'arbre comportant une extrémité inférieure solidaire d'un rotor comportant des moyens de cisaillement coopérant avec la paroi périphérique du stator pour générer un effet de cisaillement de la substance à traiter lors de la rotation du rotor, **caractérisé en ce que** le rotor comporte un couteau disposé axialement sous les moyens de cisaillement.

Selon une autre caractéristique de l'invention, les moyens de cisaillement du rotor comportent une paroi intérieure disposée coaxialement à l'intérieur de la paroi périphérique et venant en bordure de la paroi périphérique avec un faible interstice par rapport à cette dernière, la paroi intérieure comprenant des ouvertures venant périodiquement en regard des fentes de la paroi périphérique lors de la rotation du rotor.

Selon une autre caractéristique de l'invention, la paroi périphérique du stator et la paroi intérieure du rotor sont cylindriques.

Selon une autre caractéristique de l'invention, le diamètre du couteau est sensiblement égal au diamètre de la paroi intérieure.

Selon une autre caractéristique de l'invention, le couteau fait saillie à l'extrémité inférieure du rotor.

Selon encore une autre caractéristique de l'invention, le rotor comporte un moyeu s'engageant autour d'un manchon de guidage porté par l'extrémité inférieure du fût.

Selon encore une autre caractéristique de l'invention, le manchon de guidage renferme un palier de guidage de l'arbre d'entrainement du rotor.

Selon encore une autre caractéristique de l'invention, l'interstice ménagé entre la paroi périphérique du stator et la paroi intérieure du rotor présente une largeur radiale inférieure à 2 mm.

Selon encore une autre caractéristique de l'invention, le stator comporte des pieds s'étendant axialement dans le prolongement de la paroi périphérique, lesdits pieds comportant une extrémité inférieure parvenant axialement sous le niveau du couteau.

Selon encore une autre caractéristique de l'invention, le couteau est surélevé par rapport à l'extrémité inférieure des pieds d'une distance comprise entre 1 et 3 mm et préférentiellement de l'ordre de 2 mm.

Selon encore une autre caractéristique de l'invention, le diamètre de la paroi périphérique est inférieur à 8 cm et préférentiellement de l'ordre de 4 cm.

Selon encore une autre caractéristique de l'invention, l'extrémité supérieure du fût est munie de moyens de fixation permettant son accouplement avec un boîtier moteur destiné à être tenu à la main.

L'invention concerne également un accessoire amovible destiné à être accouplé à un boîtier moteur de mixeur plongeant pour la réalisation de mayonnaises, crèmes ou sauces, **caractérisé en ce qu'il** comporte un dispositif pour la réalisation d'émulsions tel que précédemment décrit.

L'invention concerne également un appareil électroménager comportant un boîtier moteur, destiné à être tenu à la main, renfermant un moteur électrique, **caractérisé en ce qu'il** comporte un dispositif pour la réalisation d'émulsions tel que précédemment décrit.

L'invention concerne également un procédé pour la réalisation de sauces, crèmes ou mayonnaises mettant en oeuvre un dispositif pour la réalisation d'émulsions tel que précédemment décrit.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue de face d'un appareil électroménager de préparation culinaire comportant un boîtier moteur accouplé à un accessoire pour la réalisation d'émulsions selon un mode particulier de réalisation de l'invention;
- la figure 2 est une vue en perspective de l'accessoire de la figure 1 représenté seul;
- la figure 3 est une vue en perspective agrandie du rotor équipant l'accessoire de la figure 2 ;
- la figure 4 est une vue en perspective éclatée de l'accessoire de la figure 2;
- la figure 5 est une vue en coupe longitudinale du l'accessoire de la figure 2.

Seuls les éléments nécessaires à la compréhension de l'invention ont été représentés. Pour faciliter la lecture des dessins, les mêmes éléments portent les mêmes références d'une figure à l'autre.

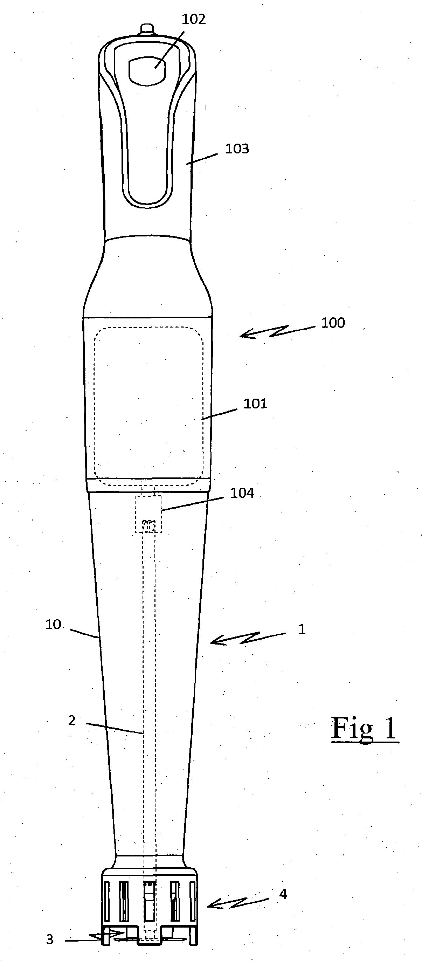

La figure 1 représente un appareil électroménager de préparation culinaire comportant un boîtier 100 moteur de forme allongée, destiné à être tenu à la main, accouplé à un accessoire 1 pour la réalisation d'émulsions.

Le boîtier 100 renferme un moteur 101, représenté schématiquement en pointillé sur la figure 1, qui est agencé selon l'axe longitudinal du boîtier 100 et dont le fonctionnement est contrôlé au moyen d'un bouton de commande 102 disposé au niveau d'une poignée de préhension 103 du boîtier. Le moteur 101 possède un arbre de sortie muni d'un entraîneur 104 rotatif traversant une ouverture pratiquée dans la partie inférieure du boîtier 100, un tel boîtier 100 étant bien connu de l'art antérieur dans le domaine des mixeurs plongeants et étant, par exemple, décrit plus en détails dans la demande de brevet FR 12 51098 déposée par la demanderesse.

L'accessoire 1 comporte un fût 10 comprenant une extrémité supérieure qui est accouplée de manière amovible au boîtier 100 au moyen d'une liaison de type baïonnette, non représentée sur les figures, le fût 10 renfermant un arbre 2 d'entrainement comportant une extrémité supérieure venant s'accoupler avec l'entraîneur 104 rotatif du boîtier 100 lorsque ce dernier est accouplé à l'accessoire 1 et une extrémité inférieure reliée à un rotor 3 disposé à l'intérieur d'un stator 4 supporté par l'extrémité inférieure du fût 10.

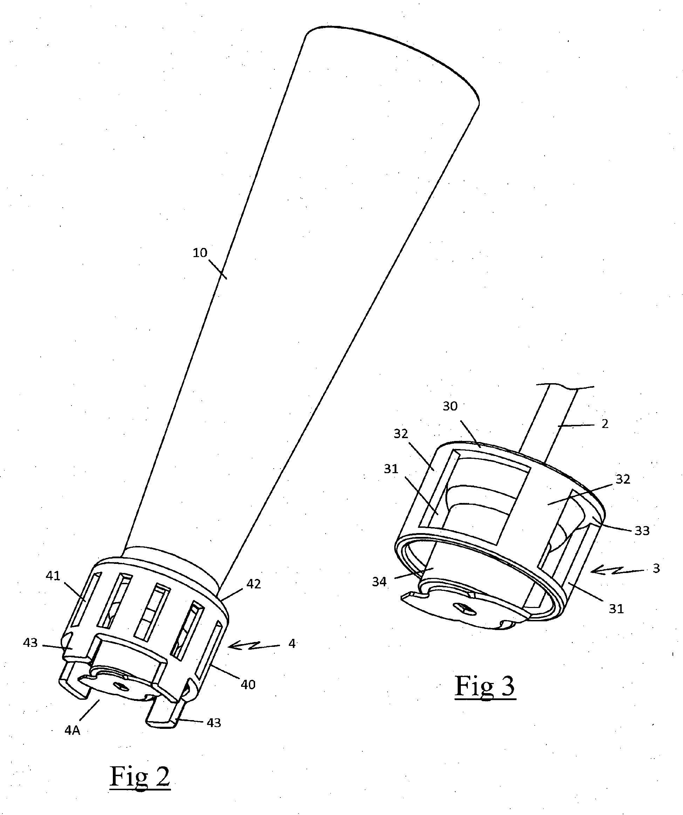

Conformément aux figures 2 à 5, le stator 4 comporte une extrémité inférieure ouverte 4A et une paroi périphérique 40 cylindrique ajourée munie de fentes 41 traversantes formant des passages permettant la circulation des ingrédients, la paroi périphérique 40 comprenant une extrémité supérieure reliée au fût 10 par une collerette 42 et le stator 4 comportant avantageusement quatre pieds 43 venant dans le prolongement axial de la paroi périphérique 40, les quatre pieds 43 étant répartis à 90° les uns des autres et faisant saillies sous la paroi périphérique 40 sur une hauteur de l'ordre de 8 mm.

A titre d'exemple, la paroi périphérique 40 du stator 4 présente un diamètre extérieur de l'ordre 40 mm et un diamètre intérieur de l'ordre de 35 mm pour une hauteur de l'ordre de 22 mm et comporte onze fentes 41 régulièrement réparties sur son pourtour, les fentes 41 présentant une largeur de l'ordre de 4 mm pour une hauteur de l'ordre de 17 mm et s'étendant avantageusement selon un axe parallèle à l'axe longitudinal du fût 10. De manière préférentielle, le stator 4 et le fût 10 forment une pièce monobloc en matériau plastique obtenue par un procédé de moulage.

Le rotor 3 comporte une paroi intérieure 30 cylindrique disposée dans le volume de la paroi périphérique 40 du stator et coaxialement à cette dernière, la paroi intérieure 30 s'étendant sensiblement sur toute la hauteur de la paroi périphérique 40 et comportant des ouvertures 31 régulièrement réparties qui sont séparées par des bras de liaison 32 s'étendant parallèlement à l'arbre d'entrainement du rotor 3. Un faible interstice, préférentiellement inférieur à 2 mm, est ménagé entre les bras de liaison 32 de la paroi intérieure 30 et la paroi périphérique 40 de manière à engendrer des efforts de cisaillement sur les ingrédients présents entre ces deux parois 30, 40 lors de la rotation du rotor 3.

A titre d'exemple, la paroi intérieure 30 du rotor présente un diamètre extérieur de l'ordre de 35 mm et un diamètre intérieur de l'ordre de 30 mm et comporte quatre ouvertures 31 régulièrement réparties présentant une hauteur de l'ordre de 17 mm et une largeur de l'ordre de 16 mm.

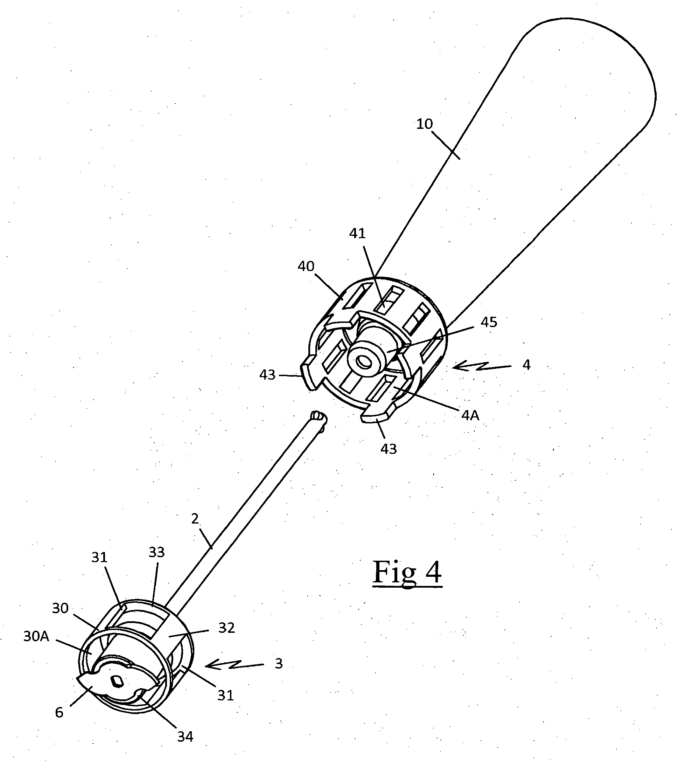

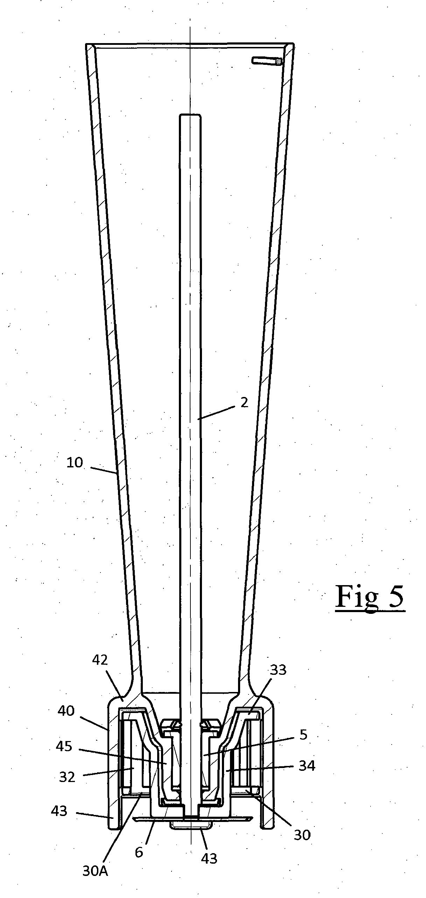

La paroi intérieure 30 cylindrique comporte une extrémité inférieure ouverte 30A et une extrémité supérieure reliée par un disque 33 à un moyeu 34 venant s'engager sur un manchon de guidage 45 de forme complémentaire, visible sur les figures 4 et 5, un espace étant ménagé entre le moyeu 34 du rotor et le manchon de guidage 45 du stator de manière à garantir une libre rotation du rotor 3. Bien que le disque 33 soit représenté plein sur les figures, il pourra également, dans une variante de réalisation, être largement ajouré afin de favoriser le nettoyage du rotor 3.

Le moyeu 34 du rotor est fixé à l'extrémité inférieure de l'arbre d'entrainement 2, le manchon de guidage 45 renfermant un palier 5, visible sur la figure 5, assurant le guidage de l'arbre d'entrainement 2 de manière à garantir un excellent maintien du rotor 3 au sein du stator 4.

Le rotor 3 comporte un couteau 6 rapporté sur l'arbre d'entrainement 2 à l'extrémité inférieure du moyeu 34, cette extrémité débordant axialement de la paroi intérieure 30 de manière à ce que le couteau 6 se trouve disposé dans l'espace ménagé entre le bord inférieur de la paroi intérieure 30 et l'extrémité inférieure des pieds 43 du stator.

A titre d'exemple, le couteau 6 est constitué par un couteau plat comportant deux lames et présentant un diamètre externe de l'ordre de 30 mm.

De manière avantageuse, le couteau 6 est surélevé de 1 à 3 mm par rapport à l'extrémité inférieure des pieds 43 du stator et se trouve disposé entre 4 et 6 mm en dessous du bord inférieur de la paroi intérieure 30 du rotor, une telle caractéristique permettant d'optimiser le broyage des aliments et/ou remuage des aliments liquides avant leur aspiration au travers de la paroi intérieure 30 du rotor par l'extrémité inférieure ouverte 30A.

Le fonctionnement de l'appareil électroménager ainsi équipé de l'accessoire pour la réalisation des émulsions va maintenant être décrit.

Lorsque l'utilisateur souhaite réaliser une émulsion ou une sauce, telles une mayonnaise, une sauce tartare, une sauce aurore, de l'aïoli etc..., il place l'ensemble des ingrédients nécessaires à la réalisation de la recette dans un récipient de type gobelet.

II amène ensuite l'accessoire 1 dans le récipient de manière à appliquer les pieds 43 du stator contre le fond du récipient, les pieds 43 formant une cage de protection permettant d'éviter que le couteau 6 ne vienne en contact contre les parois ou le fond du récipient.

II lui suffit alors d'appuyer sur le bouton de commande 102 du boîtier pour mettre en marche le moteur 101 et entrainer la rotation du rotor 3 à une vitesse préférentiellement comprise entre 10 000 et 20 000 tours/min.

Les éventuels aliments solides et les aliments en phase aqueuse présents dans le fond du récipient sont alors broyés et/ou mélangés par le couteau 6 en rotation avant d'être incorporés dans la phase huileuse par le cisaillement provoqué par la rotation de la paroi intérieure 30 dans la paroi périphérique 40. En effet, du fait des différences de densité, les aliments solides et la phase aqueuse se trouvent, au départ de la préparation, disposés à proximité du fond du récipient, c'est-à-dire dans la zone de travail du couteau 6 alors que la phase huileuse flotte au dessus de la phase aqueuse, c'est-à-dire dans la zone de travail des bras de liaison 32 de la paroi intérieure. On obtient ainsi un prébroyage des aliments solides et/ou un remuage de la phase aqueuse avant leur aspiration, par l'extrémité inférieure ouverte 30A, dans la zone de travail de la paroi intérieure 30 du rotor et leur incorporation dans la phase huileuse grâce au cisaillement provoqué par la rotation de la paroi intérieure 30 vis-à-vis de la paroi périphérique 40, un tel cisaillement permettant d'obtenir un résultat homogène de la préparation.

L'appareil ainsi réalisé présente donc l'avantage de permettre la réalisation d'une grande variété de recettes avec une grande efficacité et ceci sans se préoccuper de l'ordre d'introduction des ingrédients dans le récipient mais, au contraire, en disposant tous les ingrédients dès le départ dans le récipient.

Ainsi, un tel accessoire permet également de réaliser des sauces au yaourt, des sauces vinaigrettes, du guacamole ou bien encore des recettes sucrées telles que de la crème fouettée avec des fruits.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, les fentes traversantes du stator pourront être inclinées par rapport à l'axe longitudinal du fût et les parois intérieures du rotor pourront également être inclinées par rapport à l'axe longitudinal, soit dans le même sens que les fentes traversantes, soit à l'opposé.

Ainsi, dans une variante de réalisation non représentée, la paroi intérieure du rotor pourra comporter une extrémité supérieure ouverte et une extrémité inférieure reliée au moyeu par des bras de liaison, ces bras de liaison laissant de larges ouvertures entre eux pour permettre la circulation des aliments vers l'intérieur du rotor.

Ainsi, dans une autre variante de réalisation non représentée, la hauteur des fentes traversantes du stator pourra être supérieure à la hauteur de la paroi intérieure du rotor, une telle caractéristique permettant de faciliter le nettoyage de l'accessoire.

Ainsi, dans une autre variante de réalisation non représentée, le pied de mixage pourra être solidaire du boîtier moteur.

Ainsi dans une autre variante de réalisation non représentée, le stator pourra être démuni de manchon de guidage s'engageant dans le moyeu du rotor.

## Revendications

1. Dispositif pour la réalisation d'émulsions de substances alimentaires comportant un fût (10) renfermant un arbre (2) entrainé en rotation par un moteur (101) et comportant une extrémité inférieure solidaire d'un stator (4), ledit stator (4) comprenant une extrémité inférieure ouverte (4A) et une paroi périphérique (40) munie de fentes (41) traversantes, l'arbre (2) comportant une extrémité inférieure solidaire d'un rotor (3) comportant des moyens de cisaillement (30) coopérant avec la paroi périphérique (40) du stator pour générer un effet de cisaillement de la substance à traiter lors de la rotation du rotor (3), **caractérisé en ce que** le rotor (3) comporte un couteau (6) disposé axialement sous les moyens de cisaillement (30).

2. Dispositif pour la réalisation d'émulsions selon la revendication 1, **caractérisé en ce que** les moyens de cisaillement du rotor comportent une paroi intérieure (30) disposée coaxialement à l'intérieur de la paroi périphérique (40) et venant en bordure de la paroi périphérique (40) avec un faible interstice par rapport à cette dernière, la paroi intérieure (30) comprenant des ouvertures (31) venant périodiquement en regard des fentes (41) de la paroi périphérique (40) lors de la rotation du rotor (3).

3. Dispositif pour la réalisation d'émulsions selon la revendication 2, **caractérisé en ce que** la paroi périphérique (40) du stator (4) et ladite paroi intérieure (30) du rotor (3) sont cylindriques.

4. Dispositif pour la réalisation d'émulsions selon l'une quelconque des revendications 2 à 3, **caractérisé en ce que** le diamètre du couteau (6) est sensiblement égal au diamètre de la paroi intérieure (30).

5. Dispositif pour la réalisation d'émulsions selon l'une quelconque des revendications 1 à 4, **caractérisé en ce que** ledit couteau (6) fait saillie à l'extrémité inférieure du rotor (3).

6. Dispositif pour la réalisation d'émulsions selon l'une quelconque des revendications 1 à 5, **caractérisé en ce que** le rotor (3) comporte un moyeu (34) s'engageant autour d'un manchon de guidage (45) porté par l'extrémité inférieure du fût (10).

7. Dispositif pour la réalisation d'émulsions selon la revendication 6, **caractérisé en ce que** le manchon de guidage (45) renferme un palier (5) de guidage de l'arbre (2) d'entrainement du rotor.

8. Dispositif pour la réalisation d'émulsions selon l'une quelconque des revendications 1 à 7, **caractérisé en ce que** l'interstice ménagé entre la paroi périphérique (40) du stator et la paroi intérieure (30) du rotor présente une largeur radiale inférieure à 2 mm.

9. Dispositif pour la réalisation d'émulsions selon l'une quelconque des revendications 1 à 8, **caractérisé en ce que** le stator (4) comporte des pieds (43) s'étendant axialement dans le prolongement de la paroi périphérique (40), lesdits pieds (43) comportant une extrémité inférieure parvenant axialement sous le niveau du couteau (6).

10. Dispositif pour la réalisation d'émulsions selon la revendication 9, **caractérisé en ce que** le couteau (6) est surélevé par rapport à l'extrémité inférieure des pieds (43) d'une distance comprise entre 1 et 3 mm et préférentiellement de l'ordre de 2 mm.

11. Dispositif pour la réalisation d'émulsions selon l'une quelconque des revendications 1 à 10, **caractérisé en ce que** le diamètre de la paroi périphérique (40) est inférieur à 8 cm et préférentiellement de l'ordre de 4 cm.

12. Dispositif pour la réalisation d'émulsions selon l'une quelconque des revendications 1 à 11, **caractérisé en ce que** l'extrémité supérieure du fût (10) est munie de moyens de fixation permettant son accouplement avec un boîtier (100) moteur destiné à être tenu à la main.

13. Accessoire (1) amovible destiné à être accouplé à un boîtier (100) moteur de mixeur plongeant pour la réalisation de mayonnaises, crèmes ou sauces, **caractérisé en ce qu'**il comporte un dispositif pour la réalisation d'émulsions selon la revendication 12.

14. Appareil électroménager de préparation culinaire comportant un boîtier (100) moteur, destiné à être tenu à la main, renfermant un moteur (101) électrique, **caractérisé en ce qu'il** comporte un dispositif pour la réalisation d'émulsions selon l'une quelconque des revendications 1 à 12.

15. Procédé pour la réalisation de sauces, crèmes ou mayonnaises, **caractérisé en ce qu'il** met en oeuvre un dispositif pour la réalisation d'émulsions selon l'une quelconque des revendications 1 à 12.

## Patentansprüche

1. Vorrichtung zur Herstellung von Emulsionen aus Lebensmitteln mit einem Schaft (10), der eine Welle (2) umschließt, die von einem Motor (101) in Drehung versetzt wird, und ein unteres Ende umfasst, das mit einem Stator (4) fest verbunden ist, wobei der genannte Stator (4) ein unteres offenes Ende (4A) und eine umlaufende Wand (40) umfasst, die mit durchgehenden Schlitzen (41) versehen ist, wobei die Welle (2) ein unteres Ende umfasst, das fest mit einem Rotor (3) verbunden ist, der Schermittel (30) umfasst, die mit der umlaufenden Wand (40) des Stators derart zusammenwirken, dass sie bei der Drehung des Rotors (3) eine Scherwirkung auf die zu behandelnde Substanz erzeugen, **dadurch gekennzeichnet, dass** der Rotor (3) ein Messer (6) umfasst, das axial unter den Schermitteln (30) angeordnet ist.

2. Vorrichtung zur Herstellung von Emulsionen nach Anspruch 1, **dadurch gekennzeichnet, dass** die Schermittel des Rotors eine innere Wand (30) umfassen, die koaxial zur Innenseite der umlaufenden Wand (40) angeordnet ist und mit einem schmalen Spalt zu der umlaufenden Wand (40) an diese angrenzt, wobei die innere Wand (30) Öffnungen (31) umfasst, die sich während der Drehung des Rotors (3) zeitweise gegenüber den Schlitzen (41) der umlaufenden Wand (40) befinden.

3. Vorrichtung zur Herstellung von Emulsionen nach Anspruch 2, **dadurch gekennzeichnet, dass** die umlaufende Wand (40) des Stators (4) und die genannte innere Wand (30) des Rotors (3) zylindrisch sind.

4. Vorrichtung zur Herstellung von Emulsionen nach einem der Ansprüche 2 bis 3, **dadurch gekennzeichnet, dass** der Durchmesser des Messers (6) im Wesentlichen dem Durchmesser der inneren Wand (30) entspricht.

5. Vorrichtung zur Herstellung von Emulsionen nach einem der Ansprüche 1 bis 4, **dadurch gekennzeichnet, dass** das genannte Messer (6) am unteren Ende des Rotors (3) herausragt.

6. Vorrichtung zur Herstellung von Emulsionen nach einem der Ansprüche 1 bis 5, **dadurch gekennzeichnet, dass** der Rotor (3) eine Nabe (34) aufweist, die einen Führungsstutzen (45) umgreift, der von dem unteren Ende des Schaftes (10) getragen wird.

7. Vorrichtung zur Herstellung von Emulsionen nach Anspruch 6, **dadurch gekennzeichnet, dass** der Führungsstutzen (45) ein Lager (5) zur Führung der Antriebswelle (2) des Rotors umschließt.

8. Vorrichtung zur Herstellung von Emulsionen nach einem der Ansprüche 1 bis 7, **dadurch gekennzeichnet, dass** der zwischen der umlaufenden Wand (40) des Stators und der inneren Wand (30) des Rotors ausgebildete Spalt eine radiale Breite von unter 2 mm aufweist.

9. Vorrichtung zur Herstellung von Emulsionen nach einem der Ansprüche 1 bis 8, **dadurch gekennzeichnet, dass** der Stator (4) Füße (43) aufweist, die sich axial in der Verlängerung der umlaufenden Wand (40) erstrecken, wobei die genannten Füße (43) ein unteres Ende aufweisen, das axial bis unter die Ebene des Messers (6) reicht.

10. Vorrichtung zur Herstellung von Emulsionen nach Anspruch 9, **dadurch gekennzeichnet, dass** das Messer (6) im Verhältnis zu dem unteren Ende der Füße (43) um einen Abstand zwischen 1 und 3 mm und vorzugsweise in der Größenordnung von 2 mm erhöht ist.

11. Vorrichtung zur Herstellung von Emulsionen nach einem der Ansprüche 1 bis 10, **dadurch gekennzeichnet, dass** der Durchmesser der umlaufenden Wand (40) weniger als 8 cm beträgt und vorzugsweise in der Größenordnung von 4 cm liegt.

12. Vorrichtung zur Herstellung von Emulsionen nach einem der Ansprüche 1 bis 11, **dadurch gekennzeichnet, dass** das obere Ende des Schaftes (10) mit Befestigungsmitteln ausgestattet ist, mit deren Hilfe er mit einem Motorgehäuse (100) gekuppelt werden kann, das dazu bestimmt ist, in der Hand gehalten zu werden.

13. Abnehmbares Zubehör (1), das für die Kupplung mit einem Motorgehäuse (100) eines Stabmixers zur Herstellung von Mayonnaisen, Schlagsahne oder Soßen bestimmt ist, **dadurch gekennzeichnet, dass** es eine Vorrichtung zur Herstellung von Emulsionen nach Anspruch 12 umfasst.

14. Elektrohaushaltsgerät zur Zubereitung von Speisen mit einem Motorgehäuse (100), das dazu bestimmt ist, in der Hand gehalten zu werden, und das einen Elektromotor (101) umschließt, **dadurch gekennzeichnet, dass** es eine Vorrichtung zur Herstellung von Emulsionen nach einem der Ansprüche 1 bis 12 umfasst.

15. Verfahren zur Herstellung von Soßen, Schlagsahne oder Mayonnaisen, **dadurch gekennzeichnet, dass** es eine Vorrichtung zur Herstellung von Emulsionen nach einem der Ansprüche 1 bis 12 einsetzt.

## Claims

1. Apparatus for producing emulsions of food substances comprising a barrel (10) enclosing a shaft (2) rotated by a motor (101) and having a lower end attached to a stator (4), said stator (4) comprising an open lower end (4A) and a peripheral wall (40) provided with crossing slots (41), the shaft (2) having a lower end attached to a rotor (3) having shearing means (30) cooperating with the peripheral wall (40) of the stator to generate a shearing effect on the substance to be treated as the rotor (3) rotates, **characterised in that** the rotor (3) comprises a knife (6) arranged axially under the shearing means (30).

2. Apparatus for producing emulsions according to claim 1, **characterised in that** the shearing means of the rotor comprise an inner wall (30) arranged coaxially inside the peripheral wall (40) and coming to the edge of the peripheral wall (40) with a small gap relative to the latter, the inner wall (30) comprising openings (31) coming periodically opposite the slots (41) of the peripheral wall (40) as the rotor (3) rotates.

3. Apparatus for producing emulsions according to claim 2, **characterised in that** the peripheral wall (40) of the stator (4) and said inner wall (30) of the rotor (3) are cylindrical.

4. Apparatus for producing emulsions according to claim 2 or 3, **characterised in that** the diameter of the knife (6) is substantially equal to the diameter of the inner wall (30).

5. Apparatus for producing emulsions according to any of claims 1 to 4, **characterised in that** said knife (6) protrudes at the lower end of the rotor (3).

6. Apparatus for producing emulsions according to any of claims 1 to 5, **characterised in that** the rotor (3) comprises a hub (34) engaging around a guide sleeve (45) carried by the lower end of the barrel (10).

7. Apparatus for producing emulsions according to claim 6, **characterised in that** the guide sleeve (45) encloses a bearing (5) for guiding the rotor drive shaft (2).

8. Apparatus for producing emulsions according to any of claims 1 to 7, **characterised in that** the gap formed between the peripheral wall (40) of the stator and the inner wall (30) of the rotor has a radial width of less than 2 mm.

9. Apparatus for producing emulsions according to any of claims 1 to 8, **characterised in that** the stator (4) comprises feet (43) extending axially in the extension of the peripheral wall (40), said feet (43) having a lower end reaching axially under the level of the knife (6).

10. Apparatus for producing emulsions according to claim 9, **characterised in that** the knife (6) is raised relative to the lower end of the feet (43) by a distance of between 1 mm and 3 mm and preferably about 2 mm.

11. Apparatus for producing emulsions according to any of claims 1 to 10, **characterised in that** the diameter of the peripheral wall (40) is less than 8 cm and preferably about 4 cm.

12. Apparatus for producing emulsions according to any of claims 1 to 11, **characterised in that** the upper end of the barrel (10) is equipped with fastening means allowing it to be coupled with a motor housing (100) designed to be held in the hand.

13. Removable accessory (1) designed to be coupled to a hand blender motor housing (100) for making mayonnaises, creams or sauces, **characterised in that** it comprises a device for producing emulsions according to claim 12.

14. Food preparation household electrical appliance comprising a motor housing (100), designed to be held in the hand, containing an electric motor (101), **characterised in that** it comprises a device for producing emulsions according to any of claims 1 to 12.

15. Process for the production of sauces, creams or mayonnaises, **characterised in that** it implements a device for producing emulsions according to any of claims 1 to 12.
